# EUROPÄISCHE PATENTANMELDUNG

(11) **EP 3 252 372 A1**
(43) Veröffentlichungstag der Anmeldung: **06.12.2017**
(21) Anmeldenummer: 17172112.9
(22) Anmeldetag: 22.05.2017
(51) Int. Cl.: F21V 17/16, B61D 29/00, F21V 21/02, F21V 23/06, F21S 4/28, B60Q 3/43, F21Y 103/10, F21W 101/08

(54) **LEUCHTE EINES SCHIENENFAHRZEUGES**

(30) Priorität: 31.05.2016 AT 5009016 U
(71) Anmelder: Seisenbacher GmbH, 3341 Ybbsitz (AT)
(72) Erfinder: ENTNER, Reinhard, 3304 ST. GEORGEN AM YBBSFELDE (AT)
(74) Vertreter: Babeluk, Michael

(57) **Zusammenfassung**

Die Erfindung betrifft eine Leuchte eines Schienenfahrzeuges, die aus einem von einer zumindest teilweise durchscheinenden Abdeckung (2) verschlossenem Leuchtengehäuse (1) besteht, in welchem mindestens ein Leuchtmittel-Träger (3) untergebracht ist, auf dem mindestens eine LED-Platine (4) befestigt ist.

Um zu erreichen, dass die Leuchtmittel-Träger (3) einfach getauscht werden können, sind diese werkzeuglos im Leuchtengehäuse befestigt, wobei der Leuchtmittelträger (3) mit mindestens einer Halteklammer (9) am Leuchtengehäuse fixiert ist.

## Beschreibung

Die Erfindung betrifft eine Leuchte eines Schienenfahrzeuges, die aus einem von einer zumindest teilweise durchscheinenden Abdeckung verschlossenem Leuchtengehäuse besteht, in welchem mindestens ein Leuchtmittel-Träger untergebracht ist, auf dem mindestens eine LED-Platine befestigt ist, wobei der Leuchtmittelträger über mindestens eine Längskante werkzeuglos mit dem Leuchtengehäuse verbindbar ist.

Eine solche Leuchte ist im Oberbegriff von Patentanspruch 1 definiert.

Die Leuchte besteht dabei aus dem Leuchtengehäuse sowie Mitteln zur Befestigung der Leuchte am Schienenfahrzeug, etwa an einem Waggondach, einer Waggonseitenwand oder einem Innenverkleidungsteil, wie einem Deckenelement oder einer Gepäckablage.

Bisher wurden derartige Leuchten eines Schienenfahrzeuges mit Leuchtstoffröhren ausgestattet. In den neueren Fahrzeugen kamen nun auch schon LED-Platinen zum Einsatz, jedoch wurden diese LED-Platinen meist direkt am Leuchtengehäuse befestigt. Von einem Schienenfahrzeug wird eine Lebensdauer von mehr als 30 Jahren verlangt, von LED-Platinen kann man jedoch keine derart lange Lebensdauer erwarten. Es muss daher damit gerechnet werden, dass die LED-Platinen im Laufe der Lebensdauer eines Schienenfahrzeuges zumindest einmal erneuert werden müssen. Der Tausch einer LED-Platine, die fest mit dem Leuchtengehäuse verbunden und darin verkabelt ist, stellt sich nun als viel schwieriger dar, als dies der Tausch einer bekannten Leuchtstoffröhre war, und erfordert spezielle technische Kenntnisse und Fähigkeiten, sowie entsprechendes Werkzeug. Eine solche Lösung ist in der DE 20 2012 102 292 U gezeigt. Ähnliche Nachteile besitzt auch die in der US 2007/0183156 A offenbarte Leuchte.

Eine mögliche Alternative bieten LED-Röhren im Formfaktor von bekannten Leuchtstoffröhren. Diese bieten zwar eine einfache Austauschbarkeit, allerdings ist das thermische Design schwierig. Dadurch wird die Maximalleistung begrenzt, oder bei Nichtbeachtung dieser die Lebensdauer der LEDs durch die erhöhte Temperatur stark verkürzt. Außerdem ergeben sich in einem durchgängigen Lampenband durch die Lampensockel dunkle Stellen, die in einem modernen Schienenfahrzeug nicht mehr gerne gesehen sind.

Aus der US 2009/200966 A ist eine Leuchte bekannt, bei der Leuchtmittelträger in einer Halterung eingeklemmt ist, die ihrerseits in einem Gehäuse befestigt ist. Nachteig dabei ist der erhöhte Montageaufwand. Darüber hinaus kann die Halterung thermische Probleme verursachen.

Aufgabe der vorliegenden Erfindung ist es daher, den Tausch einer LED-Platine ähnlich einfach zu gestalten, wie den Tausch einer bekannten Leuchtstoffröhre. Gleichzeitig soll eine gute Abführung der Verlustleistung ermöglicht werden. Außerdem soll beachtet werden, dass sich der Stand der Technik bei LED-Platinen ständig und rasant weiter entwickelt. Es soll daher vermieden werden, dass man zum Zeitpunkt des Tausches gezwungen ist, stark veraltete Technologien einzubauen.

Diese Aufgabe wird erfindungsgemäß durch eine Leuchte gemäß Anspruch 1 gelöst. Weitere Ausgestaltungen der Leuchte sind in den abhängigen Ansprüchen angeführt.

Erfindungsgemäß besteht der Leuchtmittelträger aus LED-Platinen, welche fest mit einem Trägerelement verbunden sind, und im Leuchtengehäuse ohne Verwendung eines Werkzeugs montiert und demontiert werden kann.

Bei der Erfindung wird vorzugsweise ein Leuchtengehäuse verwendet, das von einer zumindest teilweise durchscheinenden Abdeckung verschlossen wird. An einer Innenseite des Leuchtengehäuses befindet sich eine Aufnahme, in die ein Leuchtmittelträger eingesteckt werden kann und durch eine Halteklammer gesichert wird. Die LED-Platine wird fest mit dem Trägerelement verbunden, zum Beispiel durch Schrauben oder Niete.

Es wäre aber auch denkbar, den Leuchtmittelträger nicht in eine Aufnahme im Leuchtengehäuse einzustecken, sondern am Leuchtengehäuse speziell geformte Halteklammern zu verwenden, die den Leuchtmittelträger zur Gänze aufnehmen.

Die Erfindung sieht vor, dass in einem Leuchtengehäuse mehrere Leuchtmittelträger angeordnet sind und dass die Leuchtmittelträger ähnliche Längen aufweisen wie die bekannten Leuchtstoffröhren.

Das Leuchtengehäuse kann im Laufe der Zeit immer mit den aktuellsten LED-Platinen ausgestattet werden, solange die mechanische und elektrische Schnittstelle unverändert bestehen bleiben.

Als elektrische Schnittstelle ist im Leuchtengehäuse jeweils ein Stecker pro Leuchtmittelträger vorgesehen, der im Tauschfall eines Leuchtmittelträgers einfach ein- und ausgesteckt werden kann.

Das Trägerelement ist vorzugsweise aus einem guten Wärmeleiter gefertigt, um eine gute Temperaturkopplung mit der LED-Platine zu ermöglichen. Als besonders günstig erweist sich hier ein metallischer Werkstoff wie beispielsweise Aluminium.

Der Leuchtmittelträger liegt auf einem Haltebügel, welcher fest verbunden mit dem Leuchtengehäuse ist, flächig auf. Dadurch wird eine noch bessere Wärmeabfuhr ermöglicht, da die Abwärme in das Gehäuse geleitet wird.

Als besonders günstig bei der Fertigung erweist es sich, das Leuchtengehäuse als U Profil auszuführen. Hier eignet sich als Werkstoff besonders gut extrudiertes Aluminium. Der Haltebügel ist für eine optimale Lichtabstrahlung schräg in einer Ecke des Leuchtengehäuses angeordnet.

Das Leuchtengehäuse wird mit einer durchscheinenden Abdeckung verschlossen, welche als Lichtauslass dient. Diese kann transparent, aber auch opak als Diffusor ausgeführt sein.

Im Folgenden wird die Erfindung anhand eines Ausführungsbeispiels näher erläutert. Es zeigen:

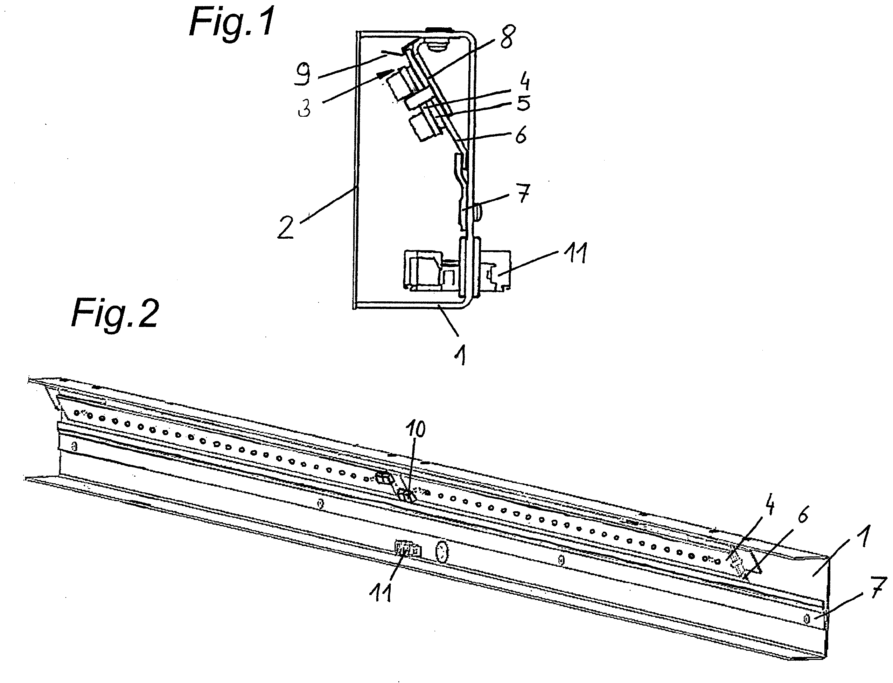

- Fig. 1: Eine erfindungsgemäße Vorrichtung in einem Querschnitt; und
- Fig. 2: die Vorrichtung in einer Ansicht von vorne ohne Leuchtenabdeckung.

Ein Leuchtengehäuse 1 in U-Form, ist mit einer Leuchtenabdeckung 2 verschlossen. Das Leuchtengehäuse 1 besteht im Wesentlichen aus einem Profil, vorzugsweise aus Aluminium. Dieses kann mittels nicht gezeigter Endplatten an den seitlichen Enden verschlossen werden.

Im Leuchtengehäuse 1 befindet sich der Leuchtmittelträger 3, bestehend aus einer LED-Platine 4, einer Zwischenschicht 5 und einem Trägerelement 6. Der Leuchtmittelträger 3 ist schräg über eine Ecke des Leuchtengehäuses 1 angeordnet und in eine Nut eingesteckt, welche durch das Leuchtmittelgehäuse 1 und einer mit dem Leuchtengehäuse 1 verbundenen Leiste 7 gebildet wird. Alternativ kann die Nut auch vollständig durch das Leuchtmittelgehäuse gebildet werden.

Der Leuchtmittelträger 3 liegt flächig auf einem Haltebügel 8 auf, welcher ebenfalls mit dem Leuchtengehäuse 1 verbunden ist. Gesichert wird die Position des Leuchtmittelträgers 3 durch Halteklammern 9. Alternativ kann der Haltebügel auch vollständig durch das Leuchtmittelgehäuse gebildet werden.

Die Leuchtmittelträger weisen eine steckbare Verbindung 10 zur Energieversorgung auf. Es können mehrere Leuchtmittelträger 3 in Längsrichtung nebeneinander in einem Leuchtengehäuse untergebracht werden. Das Leuchtengehäuse weist einen Steckverbinder 11 zur Energieversorgung der Leuchtmittelträger 3 auf, wobei der Steckverbinder 11 je mindestens eine Leitung zu den steckbaren Verbindungen 10 aufweisen.

## Patentansprüche

1. Leuchte eines Schienenfahrzeuges, die aus einem von einer zumindest teilweise durchscheinenden Abdeckung (2) verschlossenem Leuchtengehäuse (1) besteht, in welchem mindestens ein Leuchtmittelträger (3), zumindest bestehend aus mindestens einer LED-Platine (4) und einem, mit der LED-Platine (4) fest verbundenem Trägerelement (6), wobei der Leuchtmittelträger (3) über mindestens eine Längskante werkzeuglos mit dem Leuchtengehäuse (1) verbindbar ist, **dadurch gekennzeichnet, dass** der Leuchtmittelträger (3) mit mindestens einer Halteklammer (9) am Leuchtengehäuse fixiert ist.

2. Leuchte nach Anspruch 1, **dadurch gekennzeichnet, dass** der Leuchtmittelträger (3) an zumindest einer Stelle in das Leuchtengehäuse (1) eingesteckt ist.

3. Leuchte nach einem der Ansprüche 1 oder 2, **dadurch gekennzeichnet, dass** die mindestens eine LED-Platine (4) flächig, in nur einer Ebene ausgebreitet ist.

4. Leuchte nach einem der Ansprüche 1 bis 3, **dadurch gekennzeichnet, dass** in einem Leuchtengehäuse (1) mehrere Leuchtmittelträger (3) angeordnet sind.

5. Leuchte nach einem der Ansprüche 1 bis 4, **dadurch gekennzeichnet, dass** das Leuchtengehäuse (1) im Wesentlichen aus, vorzugsweise extrudiertem, Aluminium besteht.

6. Leuchte nach einem der Ansprüche 1 bis 5, **dadurch gekennzeichnet, dass** das die Abdeckung (2) im Wesentlichen aus, vorzugsweise extrudiertem, Kunststoff besteht.

7. Leuchte nach einem der Ansprüche 1 bis 6, **dadurch gekennzeichnet, dass** das Leuchtengehäuse (1) im Wesentlichen als U Profil ausgeführt ist.

8. Leuchte nach Anspruch 7, **dadurch gekennzeichnet, dass** der Leuchtmittelträger (3) schräg über eine Ecke des Profils angeordnet ist.

9. Leuchte nach einem der Ansprüche 1 bis 8, **dadurch gekennzeichnet, dass** der Leuchtmittelträger (3) an einem Haltebügel (8) aufliegt

10. Leuchte nach Anspruch 9, **dadurch gekennzeichnet, dass** der Haltebügel (8) als Teil des Profils ausgeführt ist, das im Wesentlichen das Leuchtengehäuse (1) bildet.

11. Leuchte nach einem der Ansprüche 1 bis 10, **dadurch gekennzeichnet, dass** die Abdeckung (2) transparent ist.

12. Leuchte nach einem der Ansprüche 1 bis 11, **dadurch gekennzeichnet, dass** die Abdeckung (2) als Diffusor ausgeführt ist.

13. Leuchte nach einem der Ansprüche 1 bis 12, **dadurch gekennzeichnet, dass** die LED-Platine (4) elektrisch mit dem Leuchtengehäuse (1) in Verbindung steht.

14. Leuchte nach Anspruch 13, **dadurch gekennzeichnet, dass** die elektrische Verbindung zwischen der LED-Platine (4) und dem Leuchtengehäuse (1) als steckbare Verbindung (10) ausgeführt ist.

15. Leuchte nach einem der Ansprüche 1 bis 14, **dadurch gekennzeichnet, dass** am oder im Leuchtengehäuse (1) ein Steckverbinder (11) zur Energieversorgung angebracht ist.
